# EUROPÄISCHE PATENTANMELDUNG

(11) **EP 4 588 618 A1**
(43) Veröffentlichungstag der Anmeldung: **23.07.2025**
(21) Anmeldenummer: 25153120.8
(22) Anmeldetag: 21.01.2025
(51) Int. Cl.: B25B 27/00, G01B 11/00, B62K 21/22, G01B 11/26

(54) **SITZ- UND/ODER SPUREINSTELLVORRICHTUNG FÜR EIN ZWEI- ODER DREIRADFAHRZEUG**

(30) Priorität: 22.01.2024 DE 102024101774
(71) Anmelder: Karl A. Steinel GmbH, 08645 Bad Elster (DE)
(72) Erfinder: Bräunlich, Christian, 08626 Adorf (DE)
(74) Vertreter: Steiniger, Carmen

(57) **Zusammenfassung**

Die vorliegende Erfindung betrifft eine Sitz- und/oder Spureinstellvorrichtung für ein Zwei- oder Dreiradfahrzeug mit einer Laserhaltevorrichtung und einer Fahrzeugbefestigungsvorrichtung, wobei die Laserhaltevorrichtung einen Schwenkarm aufweist, an dem wenigstens ein Laserstrahler befestigt ist, wobei der Schwenkarm mit der Fahrzeugbefestigungsvorrichtung über ein Drehgelenk verbunden ist, an dem eine Feststelleinrichtung ausgebildet ist, und der wenigstens eine Laserstrahler in eine erste Richtung und in eine zu der ersten Richtung entgegengesetzte zweite Richtung verschwenkbar ist. Erfindungsgemäß ist der Schwenkarm wechselweise einerseits zu der ersten Richtung oder zu der zweiten Richtung verschwenkbar und weist wenigstens einen ersten Ausrichtarm, einen mit dem ersten Ausrichtarm über ein Drehgelenk verbundenen zweiten Ausrichtarm und einen mit dem zweiten Ausrichtarm über ein Drehgelenk verbundenen Laserhaltearm auf, an dem der wenigstens eine Laserstrahler befestigt ist, wobei an dem Drehgelenk zwischen dem ersten Ausrichtarm und dem zweiten Ausrichtarm und dem Drehgelenk zwischen dem zweiten Ausrichtarm und dem Laserhaltearm jeweils eine Feststelleinrichtung ausgebildet ist.

## Beschreibung

Die vorliegende Erfindung betrifft eine Sitz- und/oder Spureinstellvorrichtung für ein Zwei- oder Dreiradfahrzeug mit einer Laserhaltevorrichtung und einer Fahrzeugbefestigungsvorrichtung zur Befestigung der Laserhaltevorrichtung an dem Zwei- oder Dreiradfahrzeug, wobei die Laserhaltevorrichtung einen Schwenkarm aufweist, an dem wenigstens ein Laserstrahler befestigt ist, wobei der Schwenkarm mit der Fahrzeugbefestigungsvorrichtung über ein Drehgelenk verbunden ist, an dem eine Feststelleinrichtung ausgebildet ist, und der wenigstens eine Laserstrahler in eine erste Richtung und in eine zu der ersten Richtung entgegengesetzte zweite Richtung verschwenkbar ist.

Von großer Bedeutung für das Fahrverhalten eines Zwei- oder Dreiradfahrzeuges ist es, dass bei dessen Zusammenbau und auch bei dessen Nachjustage Teile des Zwei- oder Dreiradfahrzeuges, wie Räder, Lenker und Fahrzeugsattel, exakt relativ zueinander eingestellt werden. Ein Ausrichten solcher Teile mit Augenmaß ist oftmals nicht ausreichend. Aus dem Stand der Technik sind daher unterschiedliche Ausrichtvorrichtungen für Zwei- oder Dreiradfahrzeuge bekannt.

Die Druckschrift US 2014/0375993 A1 offenbart eine Ausrichtvorrichtung für Fahrräder, mit welcher beispielsweise die Spur eines Rades oder ein Sattel ausgerichtet werden können. Die Ausrichtvorrichtung weist ein Gerät auf, an dem ein Laser befestigt ist und welches auf die Lenkergabel des Fahrrades aufgesetzt und mittels elastischer Bänder fixiert wird. Mittels eines Einstellknopfes ist der Laser drehbar und so auf verschiedene Anbauteile des Fahrrades ausrichtbar.

Die Druckschrift US 2014/0338207 A1 beschreibt ein Gerät zum Positionieren eines Fahrradsattels. Dieses Gerät weist eine Messstange auf, die sich von der Pedalkurbelwelle bis zum Sattel erstreckt. Mit dem Gerät werden eine Höhe, eine Länge, ein Versatz und eine Neigung des Sattels gemessen. Hierfür weist das Gerät eine Positioniereinrichtung mit einer Messvorrichtung auf, die beispielsweise eine Lasermessvorrichtung ist, welche entlang der Messstange gleiten kann.

Ein Verfahren zum Ausrichten verschiedener Fahrradteile, wie Räder, Sattel, Getriebe und Bremse, ist in der Druckschrift US 2012/0233833 A1 beschrieben. Mittels eines auf einem Lenker des Fahrrades befestigten Ausrichtungsgerätes werden das Vorderrad als auch der Sattel relativ zu dem Lenker eingestellt.

Eine Einstelllehre für Fahrräder, mit der Fahrradeinstellungen von einem Fahrrad abgenommen werden und auf ein anderes Fahrrad übertragen werden können, ist in der Druckschrift DE 20 2009 017 150 U1 offenbart. Die Einstelllehre ist in Form eines Dreieckes ausgebildet. Die durch Gelenke verbundenen Schenkel des Dreieckes bestehen jeweils aus einem Standrohr und einem Tauchrohr, wodurch sie in der Länge verstellbar sind. Die Schenkellänge kann durch einen Klemmring fixiert werden. Auf dem jeweiligen Tauchrohr ist eine Skala vorgesehen, an der die aktuelle Länge des Schenkels abgelesen werden kann. An den Gelenken sind Stäbe bzw. Zeiger angebracht, die beim Sattel an die Stelle der Sitzknochenauflage und beim Lenker an die Griffe bzw. die Position der Hand zeigen. Anstelle der Zeiger können auch Laserpointer vorgesehen sein. Am unteren Gelenk der Einstelllehre ist ein einschiebbares Rohrsegment bzw. halbrundes Element angebracht, welches auf das Ende des Kurbelarms gesetzt ist.

Die Druckschrift DE 203 12 862 U1 beschreibt einen Laserpointer, der an einer Tretlagerachse montiert ist, um die Stellung von Laufrädern zueinander ausrichten zu können.

Es ist die Aufgabe der vorliegenden Erfindung, eine Sitz- und/oder Spureinstellvorrichtung für ein Zwei- oder Dreiradfahrzeug zur Verfügung zu stellen, welche einfach bedienbar ist und eine exakte Ausrichtung von Teilen eines Zwei- oder Dreiradfahrzeuges ermöglicht.

Die Aufgabe wird durch eine Sitz- und/oder Spureinstellvorrichtung für ein Zwei- oder Dreiradfahrzeug mit einer Laserhaltevorrichtung und einer Fahrzeugbefestigungsvorrichtung zur Befestigung der Laserhaltevorrichtung an dem Zwei- oder Dreiradfahrzeug, wobei die Laserhaltevorrichtung einen Schwenkarm aufweist, an dem wenigstens ein Laserstrahler befestigt ist, gelöst, wobei der Schwenkarm mit der Fahrzeugbefestigungsvorrichtung über ein Drehgelenk verbunden ist, an dem eine Feststelleinrichtung ausgebildet ist, und der wenigstens eine Laserstrahler in eine erste Richtung und in eine zu der ersten Richtung entgegengesetzte zweite Richtung verschwenkbar ist, und wobei der Schwenkarm wechselweise einerseits zu der ersten Richtung oder zu der zweiten Richtung verschwenkbar ist und wenigstens einen ersten Ausrichtarm, einen mit dem ersten Ausrichtarm über ein Drehgelenk verbundenen zweiten Ausrichtarm und einen mit dem zweiten Ausrichtarm über ein Drehgelenk verbundenen Laserhaltearm aufweist, an dem der wenigstens eine Laserstrahler befestigt ist, wobei an dem Drehgelenk zwischen dem ersten Ausrichtarm und dem zweiten Ausrichtarm und dem Drehgelenk zwischen dem zweiten Ausrichtarm und dem Laserhaltearm jeweils eine Feststelleinrichtung ausgebildet ist.

Die erfindungsgemäße Sitz- und/oder Spureinstellvorrichtung wird vorzugsweise zum Einstellen eines Sattels oder Sitzes oder einer Spur eines Hinterrades oder Vorderrades eines Fahrrades verwendet.

Ebenso kann die erfindungsgemäße Sitz- und/oder Spureinstellvorrichtung jedoch auch zum Ausrichten eines Sitzes oder einer Spur eines Laufrades, Liegerades, Motorrades oder eines anderen Zwei- oder Dreiradfahrzeuges verwendet werden.

Ferner können mit der Erfindung nicht nur der Sitz oder die Spur des Zwei- oder Dreiradfahrzeuges ausgerichtet werden. So kann die erfindungsgemäße Sitz- und/oder Spureinstellvorrichtung beispielsweise auch zum Ausrichten von Bremshebeln, Ganghebeln oder anderen Teilen eines Zwei- oder Dreiradfahrzeuges verwendet werden.

Die erfindungsgemäße Sitz- und/oder Spureinstellvorrichtung weist wenigstens einen Laserstrahler auf, der in eine erste Richtung und in eine zu der ersten Richtung entgegengesetzte zweite Richtung verschwenkbar ist. Entgegengesetzt bedeutet, dass die zweite Richtung in eine andere Richtung als die erste Richtung gerichtet ist. Die zweite Richtung kann aber muss hierbei nicht unbedingt um 180° versetzt zu der ersten Richtung verlaufen.

Durch die Schwenkbarkeit des wenigstens einen Laserstrahlers in die erste und die zweite Richtung kann dieser auf verschiedene Teile des Zwei- oder Dreiradfahrzeuges bzw. einerseits auf eine Bezugsmarkierung und andererseits auf ein auszurichtendes Teil des Zwei- oder Dreiradfahrzeuges geschwenkt werden.

Als Laserstrahler ist vorliegend eine Laservorrichtung zu verstehen, die eine einen Laserstrahl aussendende Laserquelle und gegebenenfalls eine Ablenk-, Reflektions- und/oder Teilungsvorrichtung zum Ablenken, Reflektieren und/oder Teilen des von der Laserquelle ausgesandten Laserstrahls aufweist. Aus dem Laserstrahler tritt somit wenigstens ein Laserstrahl aus, der entweder geradlinig verläuft oder abgelenkt und/oder reflektiert ist. Aus dem Laserstrahler können jedoch auch zwei Laserstrahlen austreten, die durch Teilung des von der Laserquelle ausgesandten Laserstrahles entstanden sind. Die beiden Laserstrahlen können geradlinig verlaufen und/oder abgelenkt und/oder reflektiert sein.

Als Bezugsmarkierung kann irgendeine am Rahmen oder relativ zu dem Rahmen des Zwei- oder Dreiradfahrzeuges lagefixierte Markierung oder Komponente verwendet werden, auf die der wenigstens eine Laser der erfindungsgemäßen Sitz- und/oder Spureinstellvorrichtung ausgerichtet werden kann.

Als günstig hat es sich erwiesen, wenn die Bezugsmarkierung an einem Fahrzeuglenker oder Gabelschaft des Zwei- oder Dreiradfahrzeuges angeordnet ist. Beispielsweise kann die Bezugsmarkierung eine Markierung am oberen Ende des Gabelschaftes oder eine an dem Gabelschaft angebrachte Komponente sein.

Die Bezugsmarkierung kann sich auch an einer sich neben dem Zwei- oder Dreiradfahrzeug angeordneten Orientierungseinrichtung befinden. Dann sind das Zwei- oder Dreiradfahrzeug als auch die Orientierungseinrichtung während des gesamten Ausrichtvorganges in ihrer Lage fixiert bzw. zu fixieren. Das heißt, die Bezugsmarkierung kann, muss aber nicht Bestandteil der erfindungsgemäßen Sitz- und/oder Spureinstellvorrichtung sein.

Zum Ausrichten eines von dem wenigstens einen Laserstrahler ausgesandten Laserstrahls auf die Bezugsmarkierung und/oder das jeweils auszurichtende Teil des Zwei- oder Dreiradfahrzeuges ist der wenigstens eine Laserstrahler an dem Schwenkarm der Laserhaltevorrichtung angebracht.

Der Schwenkarm ist über ein Drehgelenk gelenkig mit einer Fahrzeugbefestigungsvorrichtung gekoppelt. Der Schwenkarm ist hierdurch gegenüber der Fahrzeugbefestigungsvorrichtung verschwenkbar und so auf die Bezugsmarkierung und das jeweils auszurichtende Teil des Zwei- oder Dreiradfahrzeuges ausrichtbar.

Als Drehgelenk ist vorliegend ein Bauteil zu verstehen, welches eine bewegliche Verbindung zwischen zwei Körpern, hier der Fahrzeugbefestigungsvorrichtung und dem Schwenkarm, ausbildet. Das Drehgelenk hat lediglich einen Freiheitsgrad und ermöglicht eine Rotationsbewegung, also eine Drehbewegung des Schwenkarmes, um eine Achse.

Damit ein auszurichtendes Teil des Zwei- oder Dreiradfahrzeuges exakt relativ zu einem Teil des Rahmens des Zwei- oder Dreiradfahrzeuges ausgerichtet werden kann, ist die Fahrzeugbefestigungsvorrichtung positionsfest, also lagefixiert an dem Zwei- oder Dreiradfahrzeug anbringbar.

Die Laserhaltevorrichtung, speziell der wenigstens eine Schwenkarm, ist durch das Drehgelenk derart mit der Fahrzeugbefestigungsvorrichtung gekoppelt, dass dieser zwar gegenüber der Fahrzeugbefestigungsvorrichtung verschwenkbar ist, jedoch fest an der Fahrzeugbefestigungsvorrichtung angebracht ist. Hierdurch können verschiedene Teile des Zwei- oder Dreiradfahrzeuges exakt relativ zu der jeweiligen Bezugsmarkierung ausgerichtet werden.

Bevorzugt ist die Fahrzeugbefestigungsvorrichtung derart ausgebildet, dass sie positionsfest an einer Sitzstütze oder einer Sattelstange des Zwei- oder Dreiradfahrzeuges anbringbar ist. Dies ermöglicht zum einen ein einfaches Anbringen der Laserhaltevorrichtung an dem Zwei- oder Dreiradfahrzeug und zum anderen ein gutes Ausrichten des wenigstens einen Laserstrahlers auf verschiedene auszurichtende Teile des Zwei- oder Dreiradfahrzeuges.

In weiteren Ausführungsformen der Erfindung kann die Fahrzeugbefestigungsvorrichtung auch derart ausgebildet sein, dass sie an einer anderen Komponente des Zwei- oder Dreiradfahrzeuges, wie beispielsweise einem Rahmenteil des Zwei- oder Dreiradfahrzeuges, anbringbar ist.

An einem freien Ende des Schwenkarms ist der wenigstens eine Laserstrahler angebracht.

Für ein exaktes Ausrichten des wenigstens einen auszurichtenden Teils, wie dem Sattel oder Sitz oder wenigstens einem Rad, des Zwei- oder Dreiradfahrzeuges, ist der wenigstens eine an dem Schwenkarm angeordnete Laserstrahler in eine erste Richtung und in eine zu der ersten Richtung entgegengesetzte zweite Richtung schwenkbar. So kann der wenigstens eine Laserstrahler zunächst auf die jeweilige Bezugsmarkierung und anschließend auf das jeweils auszurichtende Teil des Zwei- oder Dreiradfahrzeuges ausgerichtet werden.

Insofern die Bezugsmarkierung an einem Fahrzeuglenker oder Gabelschaft des Zwei- oder Dreiradfahrzeuges angebracht ist, ist der wenigstens eine Laserstrahler bevorzugt einerseits auf die Bezugsmarkierung am Fahrzeuglenker oder Gabelschaft des Zwei- oder Dreiradfahrzeuges und andererseits auf ein Hinterrad oder den Sattel oder Sitz des Zwei- oder Dreiradfahrzeuges ausrichtbar.

Vorteilhafterweise kann der wenigstens eine Laserstrahler so zunächst auf den Fahrzeuglenker oder Gabelschaft ausgerichtet werden, an dem die Bezugsmarkierung vorgesehen ist, und anschließend, nach dem Fixieren der Fahrzeugbefestigungsvorrichtung und dem zwischen dem Schwenkarm und der Fahrzeugbefestigungsvorrichtung vorgesehenen Drehgelenk, auf den auszurichtenden Sitz oder das auszurichtende Hinterrad des Zwei- oder Dreiradfahrzeuges.

Um den Schwenkarm in einer bestimmten Position gegenüber der Fahrzeugbefestigungsvorrichtung zu fixieren, ist an dem Drehgelenk zwischen dem wenigstens einen Schwenkarm und der Fahrzeugbefestigungsvorrichtung eine Feststelleinrichtung angeordnet. Eine solche Feststelleinrichtung kann beispielsweise eine Schraubvorrichtung, eine Klemmvorrichtung, wie eine Schnellspannvorrichtung, oder eine anders ausgebildete Feststelleinrichtung sein.

Zur Realisierung der Schwenkbarkeit des wenigstens einen Laserstrahlers ist der wenigstens eine Laserstrahler entweder drehbar an dem Schwenkarm befestigt, oder der wenigstens eine Laserstrahler ist fest mit dem Schwenkarm verbunden und der Schwenkarm ist so ausgestaltet, dass der wenigstens eine Laserstrahler durch Schwenken des Schwenkarmes zunächst auf einen Fahrzeuglenker und anschließend auf einen Sattel oder Sitz oder ein Hinterrad des Zwei- oder Dreiradfahrzeuges ausrichtbar ist. Dies wird erfindungsgemäß durch die mehrgliedrige Ausgestaltung des Schwenkarmes erreicht.

Die erfindungsgemäße Sitz- und/oder Spureinstellvorrichtung wird wie folgt verwendet:
Die Laserhaltevorrichtung der Sitz- und/oder Spureinstellvorrichtung wird mittels der Fahrzeugbefestigungsvorrichtung an dem Zwei- oder Dreiradfahrzeug, beispielsweise einer Sattelstange eines Fahrrades, befestigt.

Der an dem Schwenkarm der Laserhaltevorrichtung befestigte Laserstrahler wird auf eine Bezugsmarkierung ausgerichtet. Hierbei wird der Laserstrahler so ausgerichtet, dass ein von dem Laserstrahler ausgesandter Laserstrahl auf die Bezugsmarkierung trifft. Die Bezugsmarkierung kann, wie oben beschrieben, ein fester Punkt am Rahmen des Zwei- oder Dreiradfahrzeuges, eine an dem Zwei- oder Dreiradfahrzeug angebrachte, lagefixierte Markierung oder Komponente oder eine Markierung oder Komponente einer an einem neben dem Zwei- oder Dreiradfahrzeug angeordneten Orientierungseinrichtung sein. Das Ausrichten des Laserstrahlers auf die Bezugsmarkierung erfolgt durch Drehen der Fahrzeugbefestigungsvorrichtung um die Sattelstange und/oder Verschwenken des Schwenkarmes gegenüber der Fahrzeugbefestigungsvorrichtung.

Nach dem Ausrichten des Laserstrahlers auf die Bezugsmarkierung wird die Position und Ausrichtung der Laserhaltevorrichtung durch Feststellen der jeweiligen Feststelleinrichtung fixiert. Im einfachsten Fall weist die Feststelleinrichtung eine Schraube auf, die zur Fixierung der Position festgeschraubt wird.

Im Anschluss wird der Laserstrahler, speziell der von dem Laserstrahler ausgesandte Laserstrahl, durch Schwenken des Schwenkarmes bzw. durch Schwenken wenigstens eines Gliedes des Schwenkarmes in Richtung eines auszurichtenden Teils des Zwei- oder Dreiradfahrzeuges, wie beispielsweise eines Hinterrades eines Fahrrades, gerichtet. Die restlichen Teile der Sitz- und/oder Spureinstellvorrichtung bleiben dabei an ihrer vorher eingestellten Position fixiert.

Ist der Laserstrahler auf das jeweilige auszurichtende Teil des Zwei- oder Dreiradfahrzeuges gerichtet, wird der Schwenkarm durch Betätigen der jeweiligen Feststelleinrichtung in seiner Position fixiert. Anhand des ausgesandten Laserstrahlers kann schließlich das jeweilige auszurichtende Teil des Zwei- oder Dreiradfahrzeuges exakt ausgerichtet werden. Hinsichtlich der Ausrichtung der auszurichtenden Teile des Zwei- oder Dreiradfahrzeuges hat es sich als vorteilhaft erwiesen, wenn der Laserstrahler eine Laserlinie aussendet, anhand der das jeweilige auszurichtende Teil ausgerichtet werden kann. So kann beispielsweise ein Hinterrad eines Fahrrades exakt auf die von dem Laserstrahler ausgesandte Laserlinie ausgerichtet werden.

Nach dem Ausrichten des jeweiligen auszurichtenden Teils des Zwei- oder Dreiradfahrzeuges wird die Laserhaltevorrichtung durch Lösen der Fahrzeugbefestigungsvorrichtung von dem Zwei- oder Dreiradfahrzeug entfernt.

Bei einer alternativen Verwendung der erfindungsgemäßen Sitz- und/oder Spureinstellvorrichtung kann der von dem Laserstrahler ausgesandte Laserstrahl auch als erstes auf das auszurichtende Teil des Zwei- oder Dreiradfahrzeuges, wie auf einen Sattel eines Fahrrades, und anschließend auf die Bezugsmarkierung ausgerichtet werden. In diesem Fall wird zunächst die Sitz- und/oder Spureinstellvorrichtung beispielsweise zunächst an einer Sattelstange des Fahrrades befestigt. Dann wird der Laserstrahler so ausgerichtet, dass die von dem Laserstrahler ausgesandte Laserlinie auf den auszurichtenden Sattel trifft. Hierbei wird eine Sattellängsachse mit der Laserlinie in Deckung gebracht. Nach dem Ausrichten des Laserstrahlers, speziell der Laserlinie, auf den Sattel wird die Lage und Positionierung des den Laserstrahler aufweisenden Schwenkarmes durch festes Anbringen der Fahrzeugbefestigungsvorrichtung an der Sattelstange und Feststellen der Feststelleinrichtung fixiert. Anschließend wird der Sattel mittels der Sattelstange, an der die Sitz- und/oder Spureinstellvorrichtung befestigt ist, solange verdreht und/oder vertikal verschoben, bis der Laserstrahl sowohl auf die Sattellängsachse als auch in deren Verlängerung auf die beispielsweise am Gabelschaft des Fahrrades angeordnete Bezugsmarkierung ausgerichtet. Nach erfolgter Ausrichtung des Sattels kann die Laserhaltevorrichtung von der Sattelstange des Fahrrades entfernt werden.

Bei der vorliegenden Erfindung weist die Laserhaltevorrichtung einen Schwenkarm auf, der mit der Fahrzeugbefestigungsvorrichtung verbunden ist.

Dieser Schwenkarm ist vorzugsweise dreigliedrig ausgebildet. Er weist dann einen ersten Ausrichtarm, einen zweiten Ausrichtarm und einen Laserhaltearm auf. Der Schwenkarm kann aber auch mehr als drei Glieder, wie beispielsweise vier, fünf oder sechs Glieder, aufweisen.

Der erste Ausrichtarm ist mit seinem ersten Ende durch das Drehgelenk gelenkig mit der Fahrzeugbefestigungsvorrichtung verbunden. Mit seinem zweiten Ende ist der Ausrichtarm über ein Drehgelenk gelenkig mit einem ersten Ende des zweiten Ausrichtarmes gekoppelt.

Der zweite Ausrichtarm ist mit seinem zweiten Ende durch ein Drehgelenk gelenkig mit einem ersten Ende des Laserhaltearmes gekoppelt.

An einem dem ersten Ende gegenüberliegenden freien Ende des Laserhaltearmes ist der wenigstens eine Laserstrahler angeordnet.

Bevorzugt ist an dem Schwenkarm nur ein einziger Laserstrahler angebracht.

Dieser Laserstrahler weist vorzugsweise einen Linienlaser auf.

Zum Positionieren eines von diesem Laserstrahler ausgesandten Laserstrahls sind die einzelnen Glieder des Schwenkarmes, also der erste Ausrichtarm, der zweite Ausrichtarm und der Laserhaltearm, gelenkig miteinander verbunden. Der Schwenkarm selbst, speziell der erste Ausrichtarm, ist gelenkig mit der Fahrzeugbefestigungsvorrichtung verbunden.

An den die gelenkigen Verbindungsstellen ausbildenden Drehgelenken ist jeweils eine Feststellvorrichtung angebracht, mittels der eine Rotation des jeweiligen Drehgelenkes ermöglicht oder vermieden werden kann.

Durch die Drei- bzw. Mehrgliedrigkeit des Schwenkarmes und die in ihrer Position fixierbaren Drehgelenke kann der wenigstens eine an dem Schwenkarm angeordnete Laserstrahler optimal in die erste und die zweite Richtung ausgerichtet werden.

Die erste Richtung weist zu einer Bezugsmarkierung hin.

Die zweite Richtung verläuft in Richtung des jeweils auszurichtenden Teils des Zwei- oder Dreiradfahrzeuges.

Nachdem der Laserstrahler durch Schwenken der einzelnen Glieder des Schwenkarmes und/oder Drehen der Fahrzeugbefestigungsvorrichtung auf die vorzugsweise am Fahrzeuglenker angebrachte Bezugsmarkierung ausgerichtet ist, wird die Position des Schwenkarmes durch Befestigen der Fahrzeugbefestigungsvorrichtung und/oder Feststellen der Feststelleinrichtungen in seiner Position fixiert.

Nach dem Ausrichten des von dem Laserstrahler ausgesandten Laserstrahls auf die Bezugsmarkierung wird bei gleichbleibender Stellung des ersten und zweiten Ausrichtarmes vorzugsweise durch Schwenken des Laserhaltearms der Laserstrahler auf das auszurichtende Teil, wie den Sitz oder das Hinterrad, des Zwei- oder Dreiradfahrzeuges ausgerichtet.

Alternativ kann der Laserstrahler auch durch Drehen des Laserstrahlers um eine Längsachse des Laserhaltearms von der Bezugsmarkierung in Richtung des auszurichtenden Teils bewegt werden.

Vorteilhafterweise ist die Fahrzeugbefestigungsvorrichtung derart ausgestaltet, dass diese an einer Sitzstütze des Zwei- oder Dreiradfahrzeuges anbringbar ist.

Ist die Fahrzeugbefestigungsvorrichtung an der Sitzstütze des Zwei- oder Dreiradfahrzeuges befestigt, wird die Fahrzeugbefestigungsvorrichtung günstigerweise so platziert, dass der Schwenkarm oberhalb des Hinterrades des Zwei- oder Dreiradfahrzeuges, an einer von dem Fahrzeuglenker wegweisenden Seite des Sitzes des Zwei- oder Dreiradfahrzeuges angeordnet ist. So kann der Laserstrahler problemlos zunächst auf die vorzugsweise am Gabelschaft angeordnete Bezugsmarkierung und anschließend auf das auszurichtende Teil, wie das Hinterrad und/oder den Sitz, ausgerichtet werden.

In weiteren Ausführungsformen der Erfindung kann die Fahrzeugbefestigungsvorrichtung jedoch auch an einer anderen Komponente des Zwei- oder Dreiradfahrzeuges, wie dem Rahmen des Zwei- oder Dreiradfahrzeuges, befestigbar bzw. befestigt sein.

Der Laserhaltearm und der Schwenkarm sind für eine flexible Ausrichtung des Laserhaltearmes und des Schwenkarmes durch ein Drehgelenk gelenkig miteinander verbunden. An dem Drehgelenk ist eine Feststelleinrichtung zur Fixierung der Ausrichtung des Laserhaltearmes gegenüber dem Ausrichtarm angeordnet.

Der Ausrichtarm wiederum ist über ein Drehgelenk gelenkig mit der Fahrzeugbefestigungsvorrichtung verbunden, sodass der Ausrichtarm einschließlich des Laserhaltearmes schwenkbar gegenüber der Fahrzeugbefestigungsvorrichtung ist.

Hinsichtlich der Befestigung der erfindungsgemäßen Sitz- und/oder Spureinstellvorrichtung an dem Zwei- oder Dreiradfahrzeug ist es von Vorteil, wenn die Fahrzeugbefestigungsvorrichtung eine Klemmvorrichtung ist.

Mit der Klemmvorrichtung kann die an der Fahrzeugbefestigungsvorrichtung angebrachte Laserhaltevorrichtung schnell und lösbar an eine Komponente des Zwei- oder Dreiradfahrzeuges geklemmt werden.

Bevorzugt ist die Klemmvorrichtung derart ausgebildet, dass diese an einer Sitzstütze oder dem Rahmen des Zwei- oder Dreiradfahrzeuges klemmend befestigt werden kann.

Besonders bevorzugt weist die Klemmvorrichtung hierfür einen Hebel und einen Spannarm, die über eine Kniehebelmechanik verbunden sind, also einen Schnellspanner auf.

Zum Befestigen einer derart ausgebildeten Klemmvorrichtung wird der Spannarm um die Komponente des Zwei- oder Dreiradfahrzeuges gelegt, an der die Klemmvorrichtung angebracht werden soll, beispielsweise um die Sitzstütze. Durch Betätigen des über die Kniehebelmechanik mit dem Spannarm verbundenen Hebels wird der Spannarm an der Komponente des Zwei- oder Dreiradfahrzeuges geklemmt.

Hinsichtlich der Bedienbarkeit der Klemmvorrichtung ist der Schwenkarm vorzugsweise an einer der Klemmstelle abgewandten Seite des Spannarmes angebracht.

Es hat sich als vorteilhaft erwiesen, wenn eine einem zu klemmenden Fahrzeugteil zugewandte Innenseite des Spannarmes als Einbuchtung mit mehrfachen Kanten, also in Form eines Prismas, ausgebildet ist. Dann wird das zu klemmende Fahrzeugteil, wie beispielsweise eine Sattelstange, durch die Hebelwirkung fest in die Prismageometrie gedrückt.

Besonders günstig ist es, wenn an dem Spannarm der Klemmvorrichtung ein Verbindungsbolzen angebracht ist, der der Verbindung der Fahrzeugbefestigungsvorrichtung mit dem wenigstens einen Schwenkarm dient.

In einer alternativen Ausgestaltungsvariante der Klemmvorrichtung weist die Klemmvorrichtung eine Aufnahmeeinheit und ein durch eine Gewindeverbindung mit der Aufnahmeeinheit verbundenes Feststellelement auf, wobei die Aufnahmeeinheit eine Stangen- oder Rohraufnahme in Form einer einseitig offenen Schelle aufweist.

Die Aufnahmeeinheit ist vorzugsweise zylinderförmig ausgebildet, wobei sich von einer Mantelfläche des Zylinders in Richtung Zylindermittelachse die Stangen- oder Rohraufnahme erstreckt.

Die Stangen- oder Rohraufnahme ist vorzugsweise durch eine Aussparung in der zylinderförmigen Aufnahmeeinheit ausgebildet.

Die Stangen- oder Rohraufnahme weist beispielsweise die Form einer einseitig offenen Schelle auf. Die Stangen- oder Rohraufnahme ist damit halbzylinderförmig ausgebildet und kann damit der Aufnahme einer stangen- oder rohrförmigen Komponente, wie der Sitzstütze, des Zwei- oder Dreiradfahrzeuges dienen.

Vorzugsweise ist eine einem zu klemmenden Fahrzeugteil zugewandte Innenseite der Schelle als Einbuchtung mit mehrfachen Kanten, also in Form eines Prismas, ausgebildet ist. Dann wird das zu klemmende Fahrzeugteil, wie beispielsweise eine Sattelstange, durch die Hebelwirkung fest in die Prismageometrie gedrückt.

Durch das Feststellelement kann die in die Stangen- oder Rohraufnahme eingebrachte stangen- oder rohrförmige Komponente in der Stangen- oder Rohraufnahme geklemmt werden, wodurch die als Klemmvorrichtung ausgebildete Fahrzeugbefestigungsvorrichtung an dem Zwei- oder Dreiradfahrzeug befestigt wird.

In einer besonders bevorzugten Ausführungsform weist das Feststellelement ein Innengewinde und die Aufnahmeeinheit ein dazu passendes Außengewinde auf, wobei das Außengewinde zumindest in einem Bereich der Aufnahmeeinheit ausgebildet ist, in dem sich die Stangen- oder Rohraufnahme befindet.

Insofern die Aufnahmeeinheit zylinderförmig ausgebildet ist, weist wenigstens ein Teil einer Mantelfläche der zylinderförmigen Aufnahmeeinheit ein Außengewinde auf. Das Außengewinde erstreckt sich hierbei von einem ersten Ende der zylinderförmigen Aufnahmeeinheit in Richtung eines zweiten dem ersten Ende gegenüberliegenden Endes der Aufnahmeeinheit. Das Außengewinde erstreckt sich dabei soweit über die Aufnahmeeinheit, dass dieses auch in dem Bereich der Aufnahmeeinheit ausgebildet ist, in dem die durch eine Aussparung ausgebildete Stangen- oder Rohraufnahme ausgebildet ist.

Bei einer solchen Ausführungsform ist das Feststellelement vorzugsweise in Form einer Schraubenmutter ausgebildet, die ein zu dem Außengewinde der Aufnahmeeinheit passendes Innengewinde aufweist.

Vorteilhafterweise wird eine in die Stangen- oder Rohraufnahme eingebrachte stangen- oder rohrförmige Komponente des Zwei- oder Dreiradfahrzeuges hierbei einfach durch Aufschrauben des schraubenmutterförmigen Feststellelementes auf die Aufnahmeeinheit in der Klemmvorrichtung geklemmt. Dazu wird das schraubenmutterförmige Feststellelement soweit auf das Außengewinde des Aufnahmeelementes aufgeschraubt, bis dieses an der in die Stangen- oder Rohraufnahme eingebrachten stangen- oder rohrförmigen Komponente anliegt und diese zwischen dem Feststellelement und der Aufnahmeeinheit geklemmt ist.

Hinsichtlich der Befestigung des Schwenkarmes an der Fahrzeugbefestigungsvorrichtung ist es zudem günstig, wenn die Aufnahmeeinheit durch das Feststellelement hindurchgeführt ist und einen aus dem Feststellelement herausragenden Verbindungsbolzen aufweist, der mit dem Schwenkarm über ein Drehgelenk verbunden ist, wobei an der gelenkigen Verbindung zwischen dem Schwenkarm und dem Verbindungsbolzen die Feststelleinrichtung ausgebildet ist.

Auch bei einer solchen Ausgestaltungsvariante der Fahrzeugbefestigungsvorrichtung ist die Aufnahmeeinheit vorzugsweise zylinderförmig und das Feststellelement vorzugsweise in Form einer Schraubenmutter ausgebildet, wobei die Aufnahmeeinheit an dem ersten Ende einen Verbindungsbolzen aufweist. Vorteilhafterweise kann der Schwenkarm durch den Verbindungsbolzen gut mit der Fahrzeugbefestigungsvorrichtung verbunden werden.

Um eine Schwenkbewegung des Schwenkarmes gegenüber der Fahrzeugbefestigungsvorrichtung und damit eine Ausrichtung des wenigstens einen an dem Schwenkarm befestigten Laserstrahlers zu ermöglichen, ist der Schwenkarm durch ein Drehgelenk mit dem Verbindungsbolzen gekoppelt.

Hinsichtlich der Verbindbarkeit des Schwenkarmes mit der Fahrzeugbefestigungsvorrichtung hat es sich als günstig erwiesen, wenn wenigstens an dem Drehgelenk zwischen dem Schwenkarm und der Fahrzeugbefestigungsvorrichtung die Fahrzeugbefestigungsvorrichtung und der Schwenkarm wenigstens einseitig abgeflacht sind.

Insofern die Fahrzeugbefestigungsvorrichtung einen Verbindungsbolzen aufweist, ist der Verbindungsbindungsbolzen günstigerweise an seinem zu dem Schwenkarm ausgerichteten Ende wenigstens einseitig abgeflacht. Dann ist auch der mit dem Verbindungsbolzen zu verbindende Schwenkarm an dem zu dem Verbindungsbolzen weisenden Ende einseitig abgeflacht, sodass der Schwenkarm gut an den Verbindungsbolzen angelegt werden kann und optimal mit Verbindungsbolzen verbunden werden kann.

Zur Ausbildung des Drehgelenkes ist an der Verbindungsstelle des Schwenkarmes und des Verbindungsbolzens ein Stift, eine Schraube, ein Niet oder ein anderes Verbindungselement angeordnet.

Bei dem mehrgliedrigen Schwenkarm sind optimalerweise auch an dem Drehgelenk zwischen dem ersten Ausrichtarm und dem zweiten Ausrichtarm der erste und der zweite Ausrichtarm wenigstens einseitig abgeflacht. Hierdurch können der erste und zweite Ausrichtarm besonders gut miteinander verbunden werden.

Im Hinblick auf die Verbindung von Ausrichtarm und Laserhaltearm hat es sich zudem als günstig herausgestellt, wenn an dem Drehgelenk zwischen dem Ausrichtarm und dem Laserhaltearm entweder der Ausrichtarm geschlitzt ist und der Laserhaltearm beidseitig abgeflacht ist oder der Laserhaltearm geschlitzt ist und der Ausrichtarm beidseitig abgeflacht ist.

Der Laserhaltearm oder Ausrichtarm ist dann derart beidseitig abgeflacht, dass das die Abflachungen aufweisende Ende des Laserhaltearmes oder Ausrichtarmes in das den Schlitz aufweisende Ende des Ausrichtarmes oder Laserhaltearmes eingebracht werden kann. Durch das Einstecken des Laserhaltearmes in den Ausrichtarm bzw. des Ausrichtarmes in den Laserhaltearm können der Laserhaltearm und der Ausrichtarm gut miteinander verbunden werden.

In weiteren Ausführungsformen der Erfindung können auch der Verbindungsbolzen und der Schwenkarm und/oder die beiden miteinander zu verbindenden Ausrichtarme Abflachungen oder einen Schlitz zum Verbinden der beiden Komponenten miteinander aufweisen.

Für ein exaktes Ausrichten der erfindungsgemäßen Sitz- und/oder Spureinstellvorrichtung weist die Sitz- und/oder Spureinstellvorrichtung vorteilhafterweise eine separat von der Laserhaltevorrichtung ausgebildete, eine Fahrzeugkopplung aufweisende Laserausrichthilfeeinrichtung mit wenigstens einer Bezugsmarkierung für den wenigstens einen Laserstrahler auf.

Die Laserausrichthilfeeinrichtung kann optimalerweise durch die Fahrzeugkopplung fest an dem Zwei- oder Dreiradfahrzeug befestigt werden, wodurch auch die Bezugsmarkierung der Laserausrichthilfeeinrichtung positionsfest an dem Zwei- oder Dreiradfahrzeug angeordnet ist.

Durch die Anordnung der Bezugsmarkierung an dem Zwei- oder Dreiradfahrzeug können die Anbauteile des Zwei- oder Dreiradfahrzeuges exakt auf die Bezugsmarkierung und damit auf das Zwei- oder Dreiradfahrzeug ausgerichtet werden.

Vorteilhafterweise ist die Laserausrichthilfeeinrichtung so ausgebildet, dass diese an einem Gabelschaft des Zwei- oder Dreiradfahrzeuges anbringbar ist.

In alternativen Ausführungsformen kann die Laserausrichthilfeeinrichtung auch an einer anderen Komponente des Zwei- oder Dreiradfahrzeuges, beispielsweise dem Rahmen des Zwei- oder Dreiradfahrzeuges, anbringbar sein.

Besonders bevorzugt weist die Laserausrichthilfeeinrichtung einen Hohlzylinder mit einem fahrzeugseitigen Gewinde und einen in den Hohlzylinder einbringbaren, die Bezugsmarkierung aufweisenden Kolben auf.

Eine solche Ausgestaltung der Laserausrichthilfevorrichtung eignet sich zum Anbringen an dem Gabelschaft des Zwei- oder Dreiradfahrzeuges. Hierbei wird der das Gewinde aufweisende Hohlzylinder mittels einer Befestigungsschraube an dem Gabelschaft des Zwei- oder Dreiradfahrzeuges angeschraubt und anschließend der die Bezugsmarkierung aufweisende Kolben in den Hohlzylinder eingebracht.

Günstig ist es, wenn die Bezugsmarkierung in Form einer an dem Kolben angebrachten Kegelspitze ausgebildet ist.

Für eine leichte und zugleich sichere Befestigung des Laserstrahlers an dem Schwenkarm weist der wenigstens erste Schwenkarm wenigstens an seinem freien Ende einen in eine Aufnahmeöffnung für den Laserstrahler mündenden Einführhilfeschlitz auf.

Die Aufnahmeöffnung ist bevorzugt als Durchgangsbohrung in dem Schwenkarm ausgebildet.

Der Einführhilfeschlitz erstreckt sich von dem freien Ende des Schwenkarmes bis zu der Aufnahmeöffnung.

Durch den Einführschlitz ist die Aufnahmeöffnung aufspreizbar, wodurch der Laserstrahler einfach in die Aufnahmeöffnung eingesteckt und aus dieser entnommen werden kann.

In weiteren Ausführungsformen der Erfindung kann der Laserstrahler auch auf andere Weise an dem Schwenkarm befestigt sein. Beispielsweise kann der Laserstrahler durch eine an dem Schwenkarm angebrachte Rohrschelle mit dem Schwenkarm verbunden werden.

Zur Fixierung des Laserstrahlers in der Aufnahmeöffnung ist an dem Einführhilfeschlitz eine Feststelleinrichtung ausgebildet.

Durch die Feststelleinrichtung kann der Einführhilfeschlitz und die mit dem Einführhilfeschlitz verbundene Aufnahmeöffnung zusammengezogen werden. Das Zusammenziehen des Einführhilfeschlitzes führt zu einer Verengung der Aufnahmeöffnung, womit der in der Aufnahmeöffnung eingebrachte Laserstrahler in der Aufnahmeöffnung geklemmt wird.

Beispielsweise weist die jeweilige Feststelleinrichtung wenigstens eine Feststellschraube auf. Vorteilhafterweise ist die jeweilige Feststellschraube durch eine Durchgangsbohrung geführt, die an der Verbindungsstelle zwischen dem Laserhaltearm und dem Ausrichtarm, den beiden Ausrichtarmen oder dem Schwenkarm und der Fahrzeugkopplung eingebracht ist.

Sind der Schwenkarm, der Laserhaltearm, der Ausrichtarm und/oder der Verbindungsbolzen geschlitzt oder abgeflacht ausgebildet, ist die Durchgangsbohrung vorzugsweise in dem abgeflachten oder geschlitzten Bereich des Schwenkarmes, des Laserhaltearmes, des Ausrichtarmes und/oder des Verbindungsbolzens angeordnet.

Die Feststellschraube kann beispielsweise mit einer Schraubenmutter fixiert werden. Das Vorsehen der Feststellschraube mit Schraubenmutter erlaubt zum einen eine Verschwenkbarkeit des Schwenkarmes bzw. der einzelnen Glieder des Schwenkarmes und zum anderen die Fixierung der Lage des Schwenkarmes bzw. der einzelnen Glieder des Schwenkarmes während des Ausrichtvorganges eines auszurichtenden Teils des Zwei- oder Dreiradfahrzeuges.

Darüber hinaus ist auch die Breite des Einführschlitzes und damit der Durchmesser der mit dem Einführschlitz verbundenen Aufnahmeöffnung durch die Feststellschraube einstellbar, wodurch der in der Aufnahmeöffnung eingebrachte Laserstrahler einfach in die Aufnahmeöffnung einbringbar bzw. wieder aus dieser entnehmbar ist und sicher in der Aufnahmeöffnung gehalten werden kann.

Die Feststellschraube an dem Einführhilfeschlitz ist beispielsweise in eine quer zu dem Einführschlitz verlaufende Durchgangsbohrung eingebracht, wodurch der Einführhilfeschlitz durch die Feststellschraube zusammengezogen werden kann.

Hinsichtlich des Einbringens der Durchgangsbohrung durch den Einführhilfeschlitz und der Befestigung der Feststellschraube in der Durchgangsbohrung ist es von Vorteil, wenn auch das freie Ende des Schwenkarmes, in dem der Einführschlitz eingebracht ist, beidseitig abgeflacht ist. Die Abflachungen verlaufen hierbei parallel zu dem Einführschlitz.

Bevorzugt wird als Feststellschraube eine Sternkopfschraube verwendet.

In alternativen Ausführungsformen der erfindungsgemäßen Sitz- und/oder Spureinstellvorrichtung kann bei der Feststelleinrichtung anstatt einer Feststellschraube auch ein Schnellspanner oder ein anderer Spann- oder Schraubmechanismus verwendet werden.

Bevorzugte Ausführungsformen der vorliegenden Erfindung, deren Aufbau, Funktion und Vorteile werden im Folgenden anhand von Figuren näher erläutert, wobei
- Figur 1: schematisch eine Ausführungsform einer erfindungsgemäßen Sitz- und/oder Spureinstellvorrichtung in einer perspektivischen Ansicht von schräg oben zeigt;
- Figur 2: schematisch die Sitz- und/oder Spureinstellvorrichtung aus Figur 1 an einem Fahrrad in einer perspektivischen Ansicht von schräg oben zeigt;
- Figur 3: schematisch die Sitz- und/oder Spureinstellvorrichtung der Figuren 1 und 2 in einer Seitenansicht zeigt;
- Figur 4: schematisch eine Sitz- und/oder Spureinstellvorrichtung mit einer Fahrzeugbefestigungseinrichtung, die anstelle der in den Figuren 1 bis 3 verwendeten Fahrzeugbefestigungseinrichtung verwendet werden kann, in einer perspektivischen Ansicht von schräg oben zeigt;
- Figur 5: schematisch die Sitz- und/oder Spureinstellvorrichtung aus Figur 4 in einer Draufsicht zeigt;
- Figur 6: die Sitz- und/oder Spureinstellvorrichtung der Figuren 4 und 5 an einem Fahrrad in einer Seitenansicht zeigt; und
- Figur 7: schematisch eine vergrößerte Darstellung der an dem Fahrrad befestigten Sitz- und/oder Spureinstellvorrichtung der Figuren 4 bis 6 von der Seite zeigt.

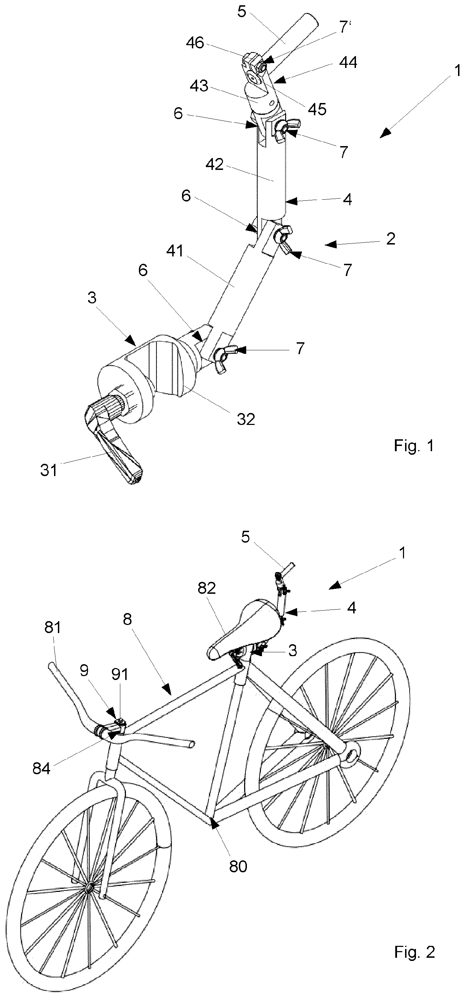

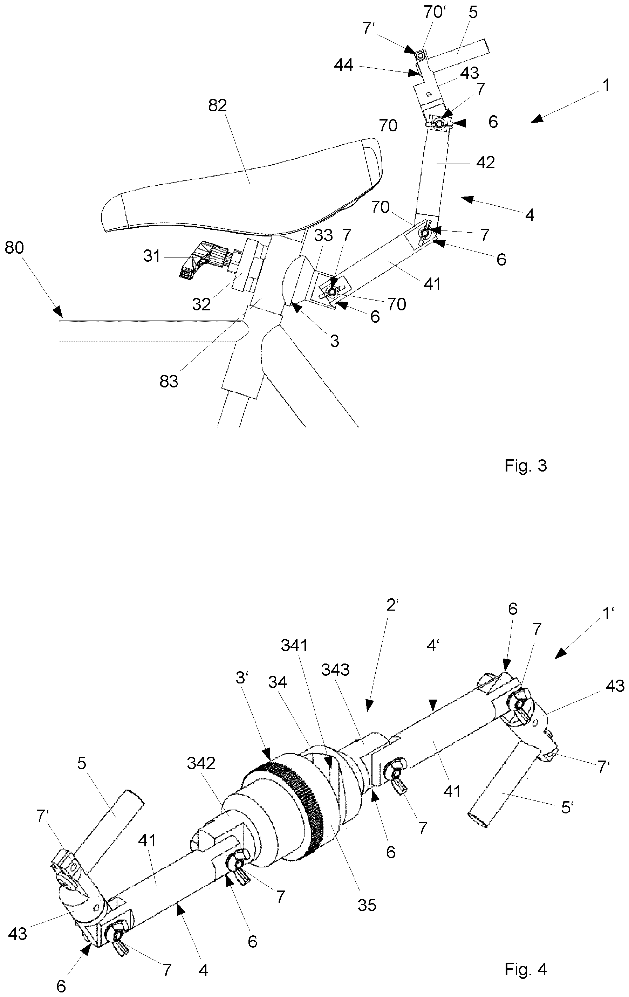

Die Figuren 1 bis 3 zeigen eine Ausführungsform einer erfindungsgemäßen Sitz- und/oder Spureinstellvorrichtung 1, wobei die Sitz- und/oder Spureinstellvorrichtung 1 in den Figuren 2 und 3 an einem Fahrrad 80 befestigt ist.

Die Sitz- und/oder Spureinstellvorrichtung 1 weist eine Laserhaltevorrichtung 2 auf, die in dem gezeigten Ausführungsbeispiel an einer Sattelstange 83 des Fahrrades 80 befestigt ist. An einem Fahrzeuglenker 81 des Fahrrades 80 ist eine Laserausrichthilfeeinrichtung 9 angeordnet.

Die Sitz- und/oder Spureinstellvorrichtung 1 weist ferner eine mit der Laserhaltevorrichtung 2 verbundene und eine in Form eines Schnellspanners ausgebildete Fahrzeugbefestigungsvorrichtung 3 auf. In der gezeigten Ausführungsform weist die Laserhaltevorrichtung 2 einen dreigliedrig ausgebildeten, an der Fahrzeugbefestigungsvorrichtung 3 angebrachten Schwenkarm 4 auf.

Die Fahrzeugbefestigungsvorrichtung 3 weist in der gezeigten Ausführungsform einen bogen- oder U-förmigen Spannarm 32 und einen mit dem Spannarm 32 verbundenen Hebel 31 auf. Der Spannarm 32 ist derart ausgebildet, dass dieser eine Sattelstange 83 des Fahrrades 80 umgreifen kann. Durch den Hebel 31 ist die Fahrzeugbefestigungsvorrichtung 3 an der Sattelstange 83 des Fahrrades 80 klemmbar.

Eine einem zu klemmenden Fahrzeugteil des Fahrrades 80 zugewandte Innenseite des Spannarmes 32 ist als Einbuchtung mit mehrfachen Kanten ausgebildet, hat also eine Prismageometrie.

An dem Spannarm 32 ist zur Befestigung des Schwenkarmes 4 an der Fahrzeugbefestigungsvorrichtung 3 ein Verbindungsbolzen 33 angebracht.

In dem gezeigten Ausführungsbeispiel ist der Verbindungsbolzen 33 an einer dem Hebel 31 gegenüberliegenden Seite des Spannarmes 32 angeordnet. So kann der Hebel 31 zum Klemmen oder Lösen der Fahrzeugbefestigungsvorrichtung 3 ohne Behinderung durch den Schwenkarm 4 betätigt werden. Andererseits kann der Schwenkarm 4 ohne Behinderung durch den Hebel 31 ausgerichtet werden.

In der in den Figuren 1 bis 3 gezeigten Ausführungsform der Sitz- und/oder Spureinstellvorrichtung 1 ist der Verbindungsbolzen 33 an seinem zu dem Schwenkarm 4 zeigenden Ende beidseitig abgeflacht. Der Schwenkarm 4 kann hierdurch besonders gut mit dem Verbindungsbolzen 33 verbunden werden.

Der Schwenkarm 4 ist in der gezeigten Ausführungsform dreigliedrig ausgebildet. Der Schwenkarm 4 weist einen ersten Ausrichtarm 41, einen zweiten Ausrichtarm 42 und einen Laserhaltearm 43 auf. Der erste Ausrichtarm 41 ist über ein Drehgelenk 6 mit dem Verbindungsbolzen 33 und über ein Drehgelenk 6' mit dem zweiten Ausrichtarm 42 verbunden. Der zweite Ausrichtarm 42 ist über ein weiteres Drehgelenk 6" mit dem Laserhaltearm 43 gekoppelt. Dies ermöglicht ein exaktes Ausrichten eines an dem Schwenkarm 4 angebrachten Laserstrahlers 5.

Der erste Ausrichtarm 41 ist zylinderförmig ausgebildet und über den Verbindungsbolzen 33 mit der Fahrzeugbefestigungsvorrichtung 3 gekoppelt.

Für eine optimale Verbindung des Verbindungsbolzens 33 mit dem ersten Ausrichtarm 41 ist das zu dem Verbindungsbolzen 33 weisende Ende des ersten Ausrichtarmes 41 beidseitig abgeflacht ausgebildet. So kann der erste Ausrichtarm 41 gut mit dem Verbindungsbolzen 33 in Kontakt gebracht werden. Außerdem ist eine zum gelenkigen Verbinden des Verbindungsbolzens 33 mit dem ersten Ausrichtarm 41 vorgesehene Feststellschraube 70 gut in den Verbindungsbereich von Verbindungsbolzen 33 und erstem Ausrichtarm 41 einbringbar.

Im verbundenen Zustand von Verbindungsbolzen 33 und erstem Ausrichtarm 41 liegt eine abgeflachte, plane Fläche des Verbindungsbolzens 33 an einer abgeflachten, planen Fläche des ersten Ausrichtarmes 41 an. Die Feststellschraube 70 verläuft senkrecht zu den planen Flächen des Verbindungsbolzens 33 und des ersten Ausrichtarms 41, durch die planen Flächen des Verbindungsbolzens 33 und des ersten Ausrichtarms 41 hindurch.

Der erste Ausrichtarm 41 ist mit dem zweiten Ausrichtarm 42, welcher ebenfalls zylinderförmig ausgebildet ist, gekoppelt.

Zum Verbinden des ersten und zweiten Ausrichtarmes 41, 42 sind der erste und der zweite Ausrichtarm 41, 42 an ihrer Verbindungsstelle jeweils beidseitig abgeflacht.

Der erste und der zweite Ausrichtarm 41, 42 sind durch eine Feststellschraube 70 miteinander verbunden. Die Feststellschraube 70 verläuft senkrecht zu den abgeflachten Bereichen des ersten und des zweiten Ausrichtarmes 41, 42, durch die abgeflachten Bereiche des ersten und des zweiten Ausrichtarmes 41, 42.

Der zweite Ausrichtarm 42 ist mit dem Laserhaltearm 43 gekoppelt.

Der Laserhaltearm 43 ist zylinderförmig ausgebildet, wobei der Laserhaltearm 43 an seinem zu dem zweiten Ausrichtarm 42 weisenden Ende beidseitig abgeflacht ist und eine Durchgangsbohrung zum Durchführen einer Feststellschraube 70 aufweist.

An einem freien Ende 44 des Laserhaltearms 43 ist der Laserstrahler 5 angebracht. Hierzu weist der Laserhaltearm 43 eine Aufnahmeöffnung 45 auf. Die Aufnahmeöffnung 45 ist in der vorliegenden Ausführungsform der Sitz- und/oder Spureinstellvorrichtung 1 als Durchgangsbohrung ausgebildet. Die Durchgangsbohrung ist senkrecht zu einer Mittelachse des zylinderförmigen Laserhaltearms 43 ausgerichtet.

Für ein leichtes Einbringen und Entnehmen des Laserstrahlers 5 aus der Aufnahmeöffnung 45 mündet in diese ein Einführhilfeschlitz 46. Durch den Einführhilfeschlitz 46 kann die Aufnahmeöffnung 45 zusammengezogen und aufgespreizt werden. Der Einführhilfeschlitz 46 erstreckt sich von dem freien Ende 44 des Laserhaltearmes 43 bis hin zu der Aufnahmeöffnung 45, wobei der Einführhilfeschlitz 46 entlang eines Durchmessers des zylinderförmig ausgebildeten Laserhaltearmes 43 verläuft.

Das Zusammenziehen des Einführhilfeschlitzes 46 und damit das Verengen der Aufnahmeöffnung 45 wird durch eine quer zu dem Einführhilfeschlitz 46 verlaufende Feststellschraube 70' ermöglicht.

Wie in den Figuren 2 und 3 gezeigt, ist die Sitz- und/oder Spureinstellvorrichtung 1 derart ausgebildet, dass die Laserhaltevorrichtung 2 mittels der Fahrzeugbefestigungsvorrichtung 3 an der Sattelstange 83 des Fahrrades 80 befestigbar ist. Die Laserhaltevorrichtung 2 ist in der gezeigten Ausführungsform derart an dem Fahrrad 80 angebracht, dass sich der Schwenkarm 4 oberhalb eines Hinterrades 85 des Fahrrades 80 erstreckt.

Der Schwenkarm 4 ist so lang ausgebildet, dass ein von dem Laserstrahler 5 ausgestrahlter Laserstrahl über einen Sattel oder Sitz 82 des Fahrrades 80 hinweg auf eine Gabel oder einen Fahrzeuglenker 81 des Fahrrades 80 ausgerichtet werden kann.

An einem Gabelschaft 84 des Fahrzeuglenkers 81 ist in der gezeigten Ausführungsform die Laserausrichthilfeeinrichtung 9 angebracht, welche einem Ausrichten der Laserhaltevorrichtung 2 auf einen Rahmen 86 des Fahrrades 80 dient, um so später den Sattel oder Sitz 82 und/oder wenigstens eines der Räder 85, 87 des Fahrrades 80 relativ zu dem Rahmen 86 ausrichten zu können.

Die Laserausrichthilfeeinrichtung 9 weist in dem gezeigten Beispiel einen an dem Gabelschaft 84 mittels einer Befestigungsschraube befestigten Hohlzylinder auf. In den Hohlzylinder ist ein Kolben eingebracht, der eine kegelförmige Bezugsmarkierung 91 aufweist.

Für ein exaktes Ausrichten des Sattels oder Sitzes 82 oder einer Spur wenigstens eines der Räder 85, 87 des Fahrrades 80 relativ zu dem Rahmen 86 des Fahrrades 80 kann die Laserhaltevorrichtung 2 zunächst auf die Bezugsmarkierung 91 ausgerichtet werden. Hierzu werden die einzelnen Glieder des Schwenkarmes 4, also der erste und der zweite Ausrichtarm 41, 42 und der Laserhaltearm 43, unter gleichzeitigem Einsatz der Feststellschrauben 70 derart positioniert, dass ein von dem Laserstrahler 5 ausgestrahlter Laserstrahl beispielsweise auf eine Spitze der kegelförmigen Bezugsmarkierung 91 trifft. Unter Umständen ist für das Ausrichten des Laserstrahls auf die Bezugsmarkierung 91 auch ein Drehen der Laserhaltevorrichtung 2 um die Sattelstange 83 erforderlich. Dies wird durch zeitweiliges Lösen der Fahrzeugbefestigungsvorrichtung 3 ermöglicht.

Ist der Laserstrahl auf die Bezugsmarkierung 91 ausgerichtet, kann das Ausrichten des Sattels oder Sitzes 82 oder der Spur wenigstens eines der Räder 85, 87 erfolgen. Hierzu wird der Laserhaltearm 43 durch Lösen der zwischen dem zweiten Ausrichtarm 42 und dem Laserhaltearm 43 befindlichen Feststellschraube 70 und Schwenken des Laserhaltearmes 43 um den zweiten Ausrichtarm 42 auf den Sattel oder Sitz 82 oder eines der Räder 85, 87 ausgerichtet. Die Ausrichtung der beiden Ausrichtarme 41, 42 wird dabei beibehalten. Nach dem Ausrichten des Laserstrahls auf den Sattel oder Sitz 82 oder eines der Räder 85, 87 wird die Feststellschraube 70 zwischen dem zweiten Ausrichtarm 42 und dem Laserhaltearm 43 wieder festgestellt und der Sattel oder Sitz 82 oder wenigstens eines der Räder 85, 87 kann anhand des Laserstrahls exakt positioniert werden.

In dem gezeigten Ausführungsbeispiel ist der Laserstrahler 5 ein Linienlaser, der eine Laserlinie erzeugt. Die Verwendung eines Linienlasers ermöglicht ein besonders exaktes Ausrichten des Sattels oder Sitzes 82 oder wenigstens eines der Räder 85, 87.

Die Figuren 4 bis 7 zeigen eine Sitz- und/oder Spureinstellvorrichtung 1', wobei gleiche Bezugszeichen wie in den Figuren 1 bis 3 gleiche Merkmale bezeichnen. Die obige Beschreibung, die hinsichtlich dieser Merkmale erfolgt ist, gilt auch für die entsprechenden Merkmale in den Figuren 4 bis 6.

Die Sitz- und/oder Spureinstellvorrichtung 1' weist eine Laserhaltevorrichtung 2' mit zwei Schwenkarmen 4, 4' auf. Die Schwenkarme 4, 4' sind einander gegenüberliegend an einer Fahrzeugbefestigungsvorrichtung 3` der Sitz- und/oder Spureinstellvorrichtung 1' angeordnet.

Die Schwenkarme 4, 4' sind jeweils zweigliedrig ausgebildet. Die Schwenkarme 4, 4' weisen jeweils einen Ausrichtarm 41 und einen mit dem Ausrichtarm 41 über ein Drehgelenk 6 verbundenen Laserhaltearm 43 auf.

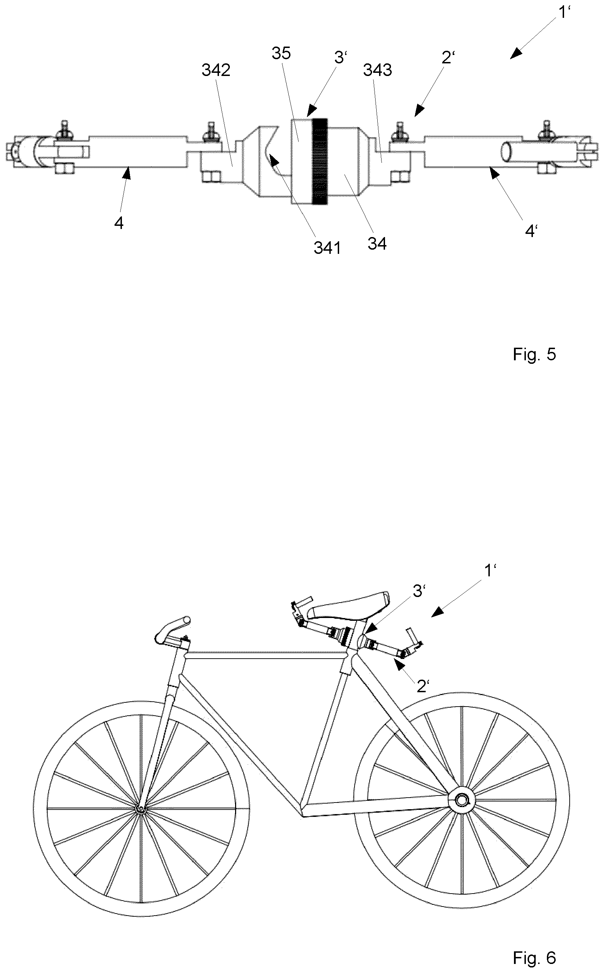

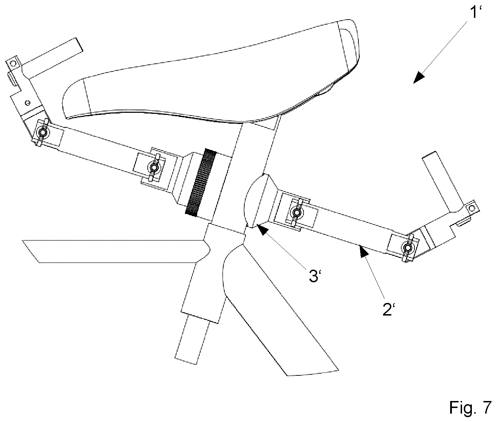

Die Fahrzeugbefestigungsvorrichtung 3` der Sitz- und/oder Spureinstellvorrichtung 1' kann auch anstelle der Fahrzeugbefestigungsvorrichtung 3 der in den Figuren 1 bis 3 gezeigten Sitz- und/oder Spureinstellvorrichtung 1 verwendet werden. Die Fahrzeugbefestigungsvorrichtung 3' ist als eine Klemmvorrichtung ausgebildet. Die Fahrzeugbefestigungsvorrichtung 3' weist eine Aufnahmeeinheit 34 auf, die, wie in den Figuren 6 und 7 gezeigt, die Sattelstange 83 des Fahrrades 80 teilweise umgreifen kann. Hierzu weist die Aufnahmeeinheit 34 eine Stangen- oder Rohraufnahme 341 auf, in die die Sattelstange 83 des Fahrrades 80 eingebracht wird.

Die Stangen- oder Rohraufnahme 341 ist in Form einer einseitig offenen Schelle ausgebildet. Eine Innenkontur der Stangen- oder Rohraufnahme 341 ist im Wesentlichen an eine Form der aufzunehmenden Sattelstange 83 angepasst. In der gezeigten Ausführungsform ist eine einem zu klemmenden Fahrzeugteil zugewandte Innenseite der Schelle als Einbuchtung mit mehrfachen Kanten, also mit einer Prismageoemtrie, ausgebildet. Im an dem Fahrrad 80 angebrachten Zustand umschließt die Stangen- oder Rohraufnahme 341 die Sattelstange 83 des Fahrrades 80 zumindest teilweise.

Bei der Sitz- und/oder Spureinstellvorrichtung 1' ist die Aufnahmeeinheit 34 zylinderförmig ausgebildet, wobei einseitig in dem Zylinder die Stangen- oder Rohraufnahme 341 vorgesehen ist. Die Stangen- oder Rohraufnahme 341 ist durch eine Aussparung in dem Zylinder ausgebildet, welche sich von einer Mantelfläche des Zylinders in Richtung Zylindermittelachse erstreckt.

Zum Klemmen der Fahrzeugbefestigungsvorrichtung 3' an der Sattelstange 83 weist die Fahrzeugbefestigungsvorrichtung 3` ein durch eine Gewindeverbindung 36 mit der Aufnahmeeinheit 34 verbundenes Feststellelement 35 auf.

Das Feststellelement 35 ist in der gezeigten Ausführungsform in Form einer Schraubenmutter ausgebildet. Das Feststellelement 35 ist derart ausgebildet, dass dessen Innendurchmesser mit einem Außendurchmesser der zylinderförmig ausgebildeten Aufnahmeeinheit 34 korreliert. Das Feststellelement 35 kann so einfach auf die Aufnahmeeinheit 34 aufgeschraubt werden. Hierzu weist das Feststellelement 35 ein Innengewinde und die Aufnahmeeinheit 34 ein dazu passendes Außengewinde auf.

Das Außengewinde ist zumindest in einem Bereich der Aufnahmeeinheit 34 ausgebildet, in dem sich die Stangen- oder Rohraufnahme 341 befindet. Das Außengewinde befindet sich also in Richtung einer Mittelachse der zylinderförmigen Aufnahmeeinheit 34 neben der Stangen- oder Rohraufnahme 34.

In der gezeigten Ausführungsform erstreckt sich das Außengewinde aber auch über die Stangen- oder Rohraufnahme 341 hinaus. Das heißt, das Außengewinde schließt sich auch in Richtung der Mittelachse der zylinderförmigen Aufnahmeeinheit 34 an die Stangen- oder Rohraufnahme 34 an. Das Feststellelement 35 kann somit soweit auf die Aufnahmeeinheit 34 aufgeschraubt werden, dass die Sattelstange 83 des Fahrrades 80 in der Stangen- oder Rohraufnahme 341 zwischen einer Klemmfläche der Stangen- oder Rohraufnahme und dem Feststellelement 35 geklemmt werden kann.

Wie es beispielsweise in Figur 4 gezeigt ist, weist die Aufnahmeeinheit 34 axial beidseitig einen Verbindungsbolzen 342, 343 auf. Die Verbindungsbolzen 342, 343 dienen dem Verbinden der Fahrzeugbefestigungsvorrichtung 3' mit den Schwenkarmen 4, 4'.

Die Ausrichtarme 41 der Schwenkarme 4, 4' sind jeweils mit einem der Verbindungsbolzen 342, 343 der Fahrzeugbefestigungsvorrichtung 3' verbunden.

Für ein optimales Verbinden der Verbindungsbolzen 342, 343 mit den Ausrichtarmen 41 weisen die Verbindungsbolzen 342, 343 als auch die mit den Verbindungsbolzen 342, 343 zu verbindenden Enden der Ausrichtarme 41 beidseitig Abflachungen auf. In den Abflachungen sind quer zu den Abflachungen verlaufende Durchgangsbohrungen eingebracht, die jeweils der Aufnahme einer Feststellschraube 70 dienen.

Durch die Feststellschrauben 70 sind die Verbindungsbolzen 342, 343 gelenkig mit den Ausrichtarmen 41 verbunden, wobei die Bewegbarkeit des jeweiligen Ausrichtarmes 41 gegenüber dem Verbindungsbolzen 342, 343 durch Feststellen der jeweiligen Feststellschraube 70 unterbunden werden kann.

Die zylinderförmig ausgebildeten Ausrichtarme 41 sind mit ihrem dem ersten Ende gegenüberliegenden zweiten Ende jeweils mit einem der Laserhaltearme 43 verbunden.

Die zweiten Enden der Ausrichtarme 41 sind bei der in den Figuren 4 bis 7 gezeigten Sitz- und/oder Spureinstellvorrichtung 1 beidseitig abgeflacht und weisen jeweils mittig einen Schlitz 411 auf. Der Schlitz 411 verläuft jeweils parallel zu den Abflachungen 412 des jeweiligen Ausrichtarmes 41 und dient der Aufnahme eines Endes des jeweiligen Laserhaltearmes 43.

Für eine besonders günstige Verbindung von Ausrichtarm 41 und Laserhaltearm 43 ist das mit dem Ausrichtarm 41 zu verbindende Ende des jeweiligen Laserhaltearmes 43 beidseitig abgeflacht. Das Ende des jeweiligen Laserhaltarmes 43 ist derart abgeflacht, dass dieses passgenau in den Schlitz 411 des jeweiligen Ausrichtarmes 41 eingebracht werden kann.

In einer alternativen Ausführungsform der Sitz- und/oder Spureinstellvorrichtung 1 ` kann der Ausrichtarm 41 auch ohne Schlitz 411 und/oder beidseitige Abflachungen 412 ausgebildet sein. Beispielsweise kann der Ausrichtarm 41 mit dem Laserhaltearm 43 auf die gleiche Weise wie der Ausrichtarm 41 mit dem Verbindungsbolzen 342, 343 verbunden werden.

An einem zweiten, freien Ende des jeweiligen Laserhaltearmes 43 ist jeweils ein Laserstrahler 5, 5' angebracht.

Zur Aufnahme des jeweiligen Laserstrahlers 5, 5' ist an dem jeweiligen Ende des Laserhaltearmes 43 eine Aufnahmeöffnung 45 eingebracht. Die Aufnahmeöffnung 45 ist als Durchgangsbohrung ausgebildet, welche senkrecht zu einer Mittelachse des zylinderförmig ausgebildeten Laserhaltearmes 43 im Bereich der Abflachungen 412 verläuft.

Für ein leichtes Einbringen des jeweiligen Laserstrahlers 5 in die jeweilige Aufnahmeöffnung 45 mündet in die jeweilige Aufnahmeöffnung 45 jeweils ein Einführhilfeschlitz 46.

Wie bei der Sitz- und/oder Spureinstellvorrichtung 1 ist auch bei der Sitz- und/oder Spureinstellvorrichtung 1' die Breite des Einführhilfeschlitzes 46 durch eine Feststellschraube 70' variierbar. Durch das Einstellen der Breite des Einführhilfeschlitzes 46 wird zugleich der Durchmesser der mit den Einführhilfeschlitzes 46 in Verbindung stehenden Aufnahmeöffnung 45 verändert, sodass der Laserstrahler 5, 5' durch Festdrehen oder Lösen der Feststellschraube 70' in der Aufnahmeöffnung 45 geklemmt bzw. einfach in diese eingebracht oder aus dieser entnommen werden kann.

In weiteren Ausführungsformen der Sitz- und/oder Spureinstellvorrichtung 1, 1` kann die Laserhaltevorrichtung 2, 2' auch zwei Schwenkarme 4, 4' aufweisen, die eine andere Anzahl an Gliedern aufweisen. Beispielsweise kann die Laserhaltevorrichtung 2, 2' zwei Schwenkarme 4, 4' mit jeweils drei Gliedern aufweisen, also jeweils zwei Ausrichtarme 41, 42 und jeweils einen Laserhaltearm 43. Ebenso ist es denkbar, dass der jeweilige Schwenkarm 4, 4' mehr als drei Glieder, wie zum Beispiel vier Glieder, besitzt.

Auch ist es möglich, dass die einzelnen Glieder des wenigstens einen Schwenkarmes 4, 4' in weiteren Ausführungsformen der Sitz- und/oder Spureinstellvorrichtung 1, 1` nicht zylinderförmig, sondern im Querschnitt drei-, vier-, fünf- oder sechs- oder achteckig ausgebildet sind.

## Patentansprüche

1. Sitz- und/oder Spureinstellvorrichtung (1) für ein Zwei- oder Dreiradfahrzeug (8) mit einer Laserhaltevorrichtung (2) und einer Fahrzeugbefestigungsvorrichtung (3, 3') zur Befestigung der Laserhaltevorrichtung (2) an dem Zwei- oder Dreiradfahrzeug (8), wobei die Laserhaltevorrichtung (2) einen Schwenkarm (4) aufweist, an dem wenigstens ein Laserstrahler (5) befestigt ist, wobei der Schwenkarm (4) mit der Fahrzeugbefestigungsvorrichtung (3, 3') über ein Drehgelenk (6) verbunden ist, an dem eine Feststelleinrichtung (7, 7') ausgebildet ist, und der wenigstens eine Laserstrahler (5) in eine erste Richtung und in eine zu der ersten Richtung entgegengesetzte zweite Richtung verschwenkbar ist, **dadurch gekennzeichnet, dass** der Schwenkarm (4) wechselweise einerseits zu der ersten Richtung oder zu der zweiten Richtung verschwenkbar ist und wenigstens einen ersten Ausrichtarm (41), einen mit dem ersten Ausrichtarm (41) über ein Drehgelenk (6') verbundenen zweiten Ausrichtarm (42) und einen mit dem zweiten Ausrichtarm (42) über ein Drehgelenk (6") verbundenen Laserhaltearm (43) aufweist, an dem der wenigstens eine Laserstrahler (5) befestigt ist, wobei an dem Drehgelenk (6') zwischen dem ersten Ausrichtarm (41) und dem zweiten Ausrichtarm (42) und dem Drehgelenk (6") zwischen dem zweiten Ausrichtarm (42) und dem Laserhaltearm (43) jeweils eine Feststelleinrichtung (7, 7') ausgebildet ist.

2. Sitz- und/oder Spureinstellvorrichtung nach einem der vorhergehenden Ansprüche, **dadurch gekennzeichnet, dass** die Fahrzeugbefestigungsvorrichtung (3) eine Klemmvorrichtung ist.

3. Sitz- und/oder Spureinstellvorrichtung nach Anspruch 2, **dadurch gekennzeichnet, dass** die Klemmvorrichtung einen Hebel (31) und einen Spannarm (32) aufweist, die über eine Kniehebelmechanik verbunden sind.

4. Sitz- und/oder Spureinstellvorrichtung nach Anspruch 2, **dadurch gekennzeichnet, dass** die Klemmvorrichtung eine Aufnahmeeinheit (34) und ein durch eine Gewindeverbindung (36) mit der Aufnahmeeinheit (34) verbundenes Feststellelement (35) aufweist, wobei die Aufnahmeeinheit (34) eine Stangen- oder Rohraufnahme (341) in Form einer einseitig offenen Schelle aufweist.

5. Sitz- und/oder Spureinstellvorrichtung nach Anspruch 4, **dadurch gekennzeichnet, dass** das Feststellelement (35) ein Innengewinde aufweist und die Aufnahmeeinheit (34) ein dazu passendes Außengewinde aufweist, wobei das Außengewinde zumindest in einem Bereich der Aufnahmeeinheit (34) ausgebildet ist, in dem sich die Stangen- oder Rohraufnahme (341) befindet.

6. Sitz- und/oder Spureinstellvorrichtung nach Anspruch 4 oder 5, **dadurch gekennzeichnet, dass** die Aufnahmeeinheit (34) durch das Feststellelement (35) hindurchgeführt ist und einen aus dem Feststellelement (35) herausragenden Verbindungsbolzen (342) aufweist, der mit dem Schwenkarm (4) über ein Drehgelenk (6) verbunden ist, wobei an der gelenkigen Verbindung zwischen dem wenigstens einen Schwenkarm (4) und dem Verbindungsbolzen (342) die Feststelleinrichtung (7, 7`) ausgebildet ist.

7. Sitz- und/oder Spureinstellvorrichtung nach Anspruch 3 oder 4, **dadurch gekennzeichnet, dass** eine einem zu klemmenden Fahrzeugteil zugewandte Innenseite des Spannarmes (32) oder der Schelle als Einbuchtung mit mehrfachen Kanten ausgebildet ist.

8. Sitz- und/oder Spureinstellvorrichtung nach einem der vorhergehenden Ansprüche, **dadurch gekennzeichnet, dass** wenigstens an dem Drehgelenk (6) zwischen dem Schwenkarm (4) und der Fahrzeugbefestigungsvorrichtung (3, 3') die Fahrzeugbefestigungsvorrichtung (3, 3') und der Schwenkarm (4) wenigstens einseitig abgeflacht sind.

9. Sitz- und/oder Spureinstellvorrichtung nach einem der vorhergehenden Ansprüche, **dadurch gekennzeichnet, dass** an dem Drehgelenk (6') zwischen dem ersten Ausrichtarm (41) und dem zweiten Ausrichtarm (42) der erste und der zweite Ausrichtarm (41, 42) wenigstens einseitig abgeflacht sind.

10. Sitz- und/oder Spureinstellvorrichtung nach einem der vorhergehenden Ansprüche, **dadurch gekennzeichnet, dass** an dem Drehgelenk (6") zwischen dem Ausrichtarm (42) und dem Laserhaltearm (43) entweder der Ausrichtarm (42) geschlitzt ist und der Laserhaltearm (43) beidseitig abgeflacht ist oder der Laserhaltearm (43) geschlitzt ist und der Ausrichtarm (42) beidseitig abgeflacht ist.

11. Sitz- und/oder Spureinstellvorrichtung nach einem der vorhergehenden Ansprüche, **dadurch gekennzeichnet, dass** die Sitz- und/oder Spureinstellvorrichtung (1) eine separat von der Laserhaltevorrichtung (2) ausgebildete, eine Fahrzeugkopplung aufweisende Laserausrichthilfeeinrichtung (9) mit wenigstens einer Bezugsmarkierung (91) für den wenigstens einen Laserstrahler (5) aufweist.

12. Sitz- und/oder Spureinstellvorrichtung nach Anspruch 11, **dadurch gekennzeichnet, dass** die Laserausrichthilfeeinrichtung (9) einen Hohlzylinder mit einem fahrzeugseitigen Gewinde und einen in den Hohlzylinder einbringbaren, die Bezugsmarkierung (91) aufweisenden Kolben aufweist.

13. Sitz- und/oder Spureinstellvorrichtung nach einem der vorhergehenden Ansprüche, **dadurch gekennzeichnet, dass** der Schwenkarm (4) wenigstens an seinem freien Ende (44) einen in eine Aufnahmeöffnung (45) für den wenigsten einen Laserstrahler (5) mündenden Einführhilfeschlitz (46) aufweist.

14. Sitz- und/oder Spureinstellvorrichtung nach Anspruch 13, **dadurch gekennzeichnet, dass** an dem Einführhilfeschlitz (46) eine Feststelleinrichtung (7, 7') ausgebildet ist.

15. Sitz- und/oder Spureinstellvorrichtung nach einem der vorhergehenden Ansprüche, **dadurch gekennzeichnet, dass** die jeweilige Feststelleinrichtung (7, 7') eine Feststellschraube aufweist.
